Europäisches Patentamt

European Patent Office

Office européen des brevets

(19)

(11) Publication number: **0 185 190**
**A1**

(12) # EUROPEAN PATENT APPLICATION

(21) Application number: **85114267.9**

(22) Date of filing: **08.11.85**

(51) Int. Cl.⁴: **A 01 J 7/00**
**G 01 F 15/08, G 01 F 1/42**
**G 01 F 15/12**

(30) Priority: **27.11.84 BE 901137**

(43) Date of publication of application:
**25.06.86 Bulletin 86/26**

(84) Designated Contracting States:
**AT CH DE FR GB IT LI LU NL SE**

(71) Applicant: **PACKO-AGRI N.V.**
**Torhoutsesteenweg 166**
**B-8210 Zedelgem(BE)**

(72) Inventor: **Delepierre, Frans**
**Aimé Claeysstraat 13**
**B-8210 Zedelgem(BE)**

(74) Representative: **Dopchie, Jean-Marc**
**Kortrijks Octrooi- en Merkenbureau - K.O.B.**
**Conservatoriumplein 8**
**B-8500 Kortrijk(BE)**

(54) Method for continuously measuring the production of liquid from a liquid-gas mixture and meter for carrying out said method.

(57) A method for continuously measuring the production of liquid from a liquid-gas mixture wherein the liquid produced is separated by projecting it along the cylindrical surface (9) of a meter receiver, while the gas is sucked up out of the mixture through a tube-like float (8) which fluctuates in accordance with the liquid produced and a meter for carrying out said method.

EP 0 185 190 A1

FIG. 5

- 1 -

"Method for continuously measuring the production of liquid from a liquid-gas mixture and meter for carrying out said method.

- - - - - - - - - - - -

The present invention relates to a method for measuring the production of liquid from a streaming liquid-gas mixture and, in particular, to the measurement of the quantity of milk received from an individual animal in a dairy.

The present invention also relates to a meter that enables one to carry out such a method.

Apparatus for the measurement of quantities of liquid, such as milk, are known. In general, modern milking machines consist of a vacuum pump installation, provided with a regulator, which supplies the necessary vacuum. A pulsator device alternates periods of suction and periods of rest. The actual milking apparatus is hung from the udder of the animal.

The milk yielded by the animals is collected in a milk pipeline, to which several milking apparatus are coupled. This pipeline carries the air/milk mixture to an air separator from which the milk is pumped to its specific storage or processing place.

Individual meters enable one to verify the individual production of each animal milked and can serve as the means for automatically removing the milking apparatus from the udder when the milking is finished. Such meters consist of a receiver with a single or double chamber, whereby the quantity of milk is registered in a volumetric or dynamic way or by weighing. In order to obtain good quality milk, the apparatus must be provided with means which can be cleaned and disinfected thoroughly. Up to now these meters were complicated, rather expensive and often difficult to clean and to maintain.

The objet of the invention is to provide a

0185190

- 2 -

more simple method to measure the production of liquid from a liquid-gas mixture by means of an apparatus that works economically and efficiently.

According to the invention there is provided a method for continuously measuring the production of liquid from a streaming liquid-gas mixture, which comprises separating liquid produced from the liquid-gas mixture by projecting the liquid along the surface of a cylindrical receiver, while the gas from the mixture is sucked up into a tube-like float, located internally and concentric to said cylindrical surface, said float moving up and down in accordance with the quantity of liquid which is drawn off at the bottom of the cylindrical receiver through an outlet-funnel on which said float is supported. The oscillations of the float are representative of the quantity of liquid that streams through the meter and said fluctuations are transmitted to a counter which displays the liquid production in litres.

The meter in accordance with the invention which enables one to carry out said method consists of a cylindrical hollow float which moves up and down in a float chamber consisting of :

- a cylindrical jacket with a supply-pipe mounted at the upper end of the cylindrical surface of said jacket;

- an upper part provided at its bottom with a circular slot with an outer diameter smaller than the diameter of the cylindrical jacket and which is placed with its opening towards said cylindrical jacket at the level of the supply-tube mounted in this jacket; and

- a lower part provided with means to hold upright the float and with a conical outlet-funnel at its bottom, and the hollow float consisting of a cylindrical tube provided at its upper end with holes and at its bottom with a conical funnel which is adapted to engage the outlet-funnel of the float chamber in use.

More specifically, the invention provides a meter for continuously measuring the production of liquid from a streaming liquid-gas mixture, comprising a receiver and a hollow float which moves up and down in said receiver, the receiver consisting of a cylindrical jacket, an upper part and a lower part, and said float consisting of a tube provided with holes and a conical funnel, the cylindrical jacket being provided at its top with a supply-tube which is mounted slantwise thereon, the upper part of the receiver being provided at its bottom with a circular slot with an outer diameter smaller than the diameter of the cylindrical jacket and which is placed with its opening towards said cylindrical jacket at the level of said supply-tube, and the lower part of the receiver being provided with means to hold upright the float and with an outlet-funnel with which the conical funnel of the float engages in use, whereby the upper part of the receiver and the top of the float are provided with respective components of an oscillation meter which registers the fluctuations of the float in the receiver.

Further features and advantages of the method and the meter in accordance with the invention will be evident from the description of a milk meter in accordance with the invention and its working method with reference to the accompanying drawings wherein :

Fig. 1 is a diagram of a milk installation wherein the milk meter is fitted;

Fig. 2 is a perspective view of the milk meter separated into its different components;

Fig. 3 is a cross-section of the milk meter in accordance with the invention;

Fig. 4 is a cross-section of the milk meter in accordance with the invention at the level of the wash-junction; and

Fig. 5 is a longitudinal cross-section, on which the cross-sections of fig. 3 and 4 are marked, of the milk meter in accordance with the invention.

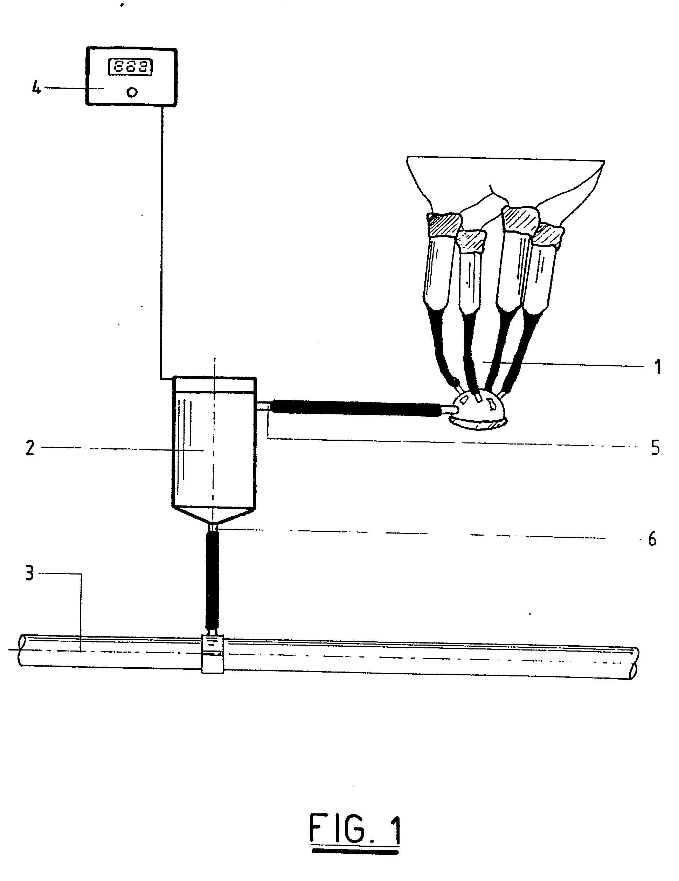

As shown in fig. 1 the milk meter (2) in accordance with the invention is mounted between the milking apparatus (1) and the milk pipeline (3). The conduit that comes from the milking apparatus (1) is connected to the milk supply tube (5) of the milk meter (2). The milk pipeline (3), which takes care of the vacuum-supply as well as of the milk discharge is mounted on the milk-outlet (6) of the milk meter (2). Electric signals coming from the milk meter (2) in accordance with the quantity of milk produced are processed and displayed in the milk meter operating panel (4) with digital display.

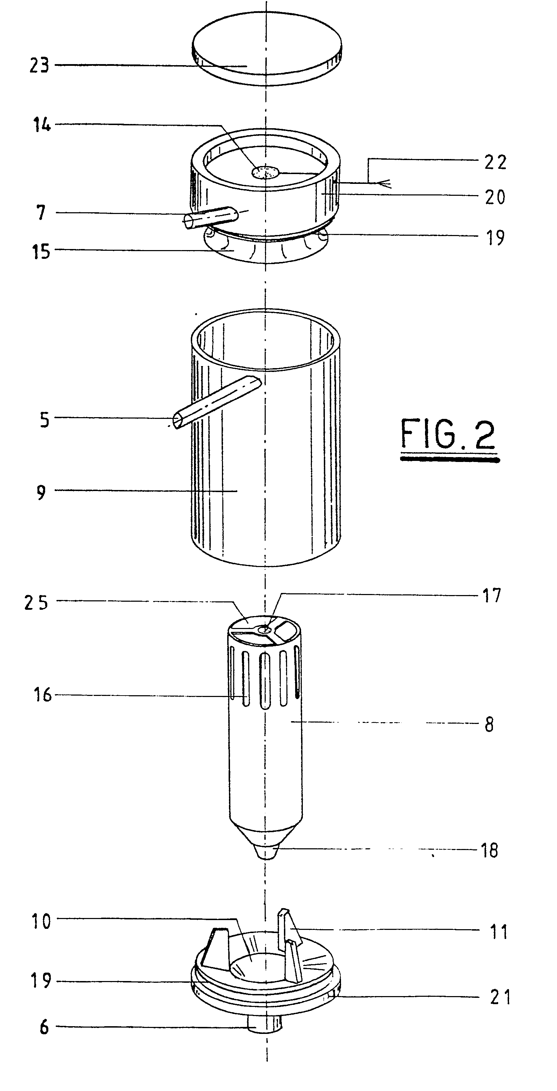

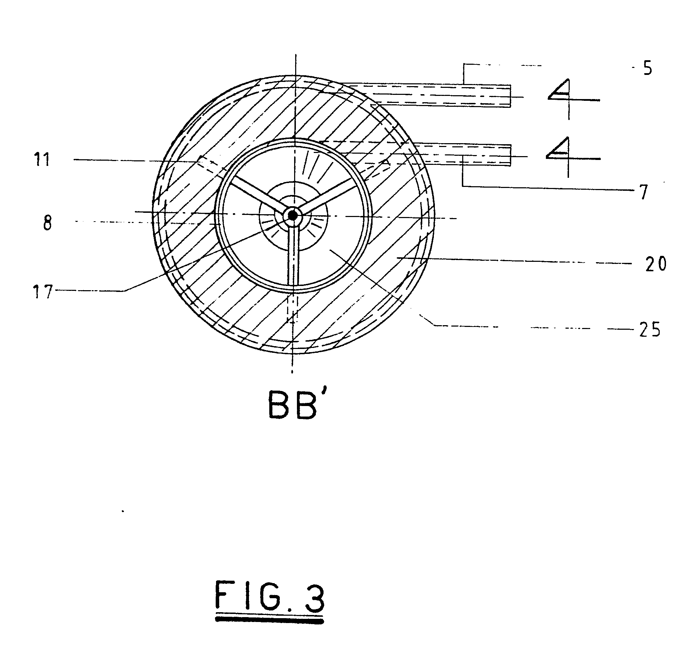

The milk meter (2) in accordance with the invention is constructed of materials which satisfy the norms set by the food industry. It is composed of different, detachable parts. The main elements of the milk meter (2) are a milk receiver and a float (8) (figs. 2,3 and 5).

The milk receiver itself is composed of a transparent, cylindrical jacket (9), provided at its upper end with a supply tube (5), mounted slantwise on the jacket (9), to which the conduit coming from the milk apparatus (1) is connected - an upper part (20) and a lower part (21).

The upper part (20) is fixed airtight to the jacket (9) with a sealing-ring (19) and is provided in the middle with a cylindrical cavity which acts as a stabilization chamber for the tube-like float (8) during its up and down movement, and with a circular slot (15) at its bottom of which the opening passes along the cylindrical surface of the jacket (9) at the level of the supply-tube (5) which is connected with a conduit coming from the milking apparatus.

The upper part (20) is also provided with a wash-junction (7) which leads tangentially into the stabilization chamber for the tube-like float (8). Through this wash-junction (7) water can be injected in order to clean the milk meter (2).

At its top, the upper part (20) is provided with a centrally mounted component of an oscillation meter (14) which is connected with the milk meter operating panel (4) by a wire (22). This component (14) is protected by a removable lid (23) fixed on the upper part (20).

The lower part (21) is fixed airtight to the jacket (9) with a sealing-ring (19) but can also form part of the jacket (9).

The lower part (21) is provided with means to hold upright the tube-like float (8) represented in figs. 2,3 and 5 in the form of two or more vertical pins (11) which are placed round an imaginary circle with a diameter equal to the inner diameter of the cylindrical stabilization chamber of the upper part (20) and a conical outlet-funnel (10), with the milk-outlet (6) connected with the milk pipeline (3).

Within the milk receiver of the milk meter (2), in accordance with the invention, a tube-like float (8), which narrows at its bottom into a conical funnel (18) with two successive angular points, is placed. The gradient of the cone of the outlet-funnel (10) is worked out in such a way that the funnel (18) touches the outlet-funnel (10) with a truncated cone surface so that the outlet-funnel (10) also functions as a seat for the tube-like float (8), while the vertical pins (11) function as guides for the said float (8) when it floats up and down.

On top of the tube-like float (8), holes (16) and (25) are provided, while in the middle of the upper surface the complementary component (17) of the oscillation meter (14) of the upper part (20) is provided.

The milk meter (2) in accordance with the invention operates as follows. The vacuum supplied by the milk installation and the pulsator device causes the flowing of the milk-air mixture towards the supply-tube (5).

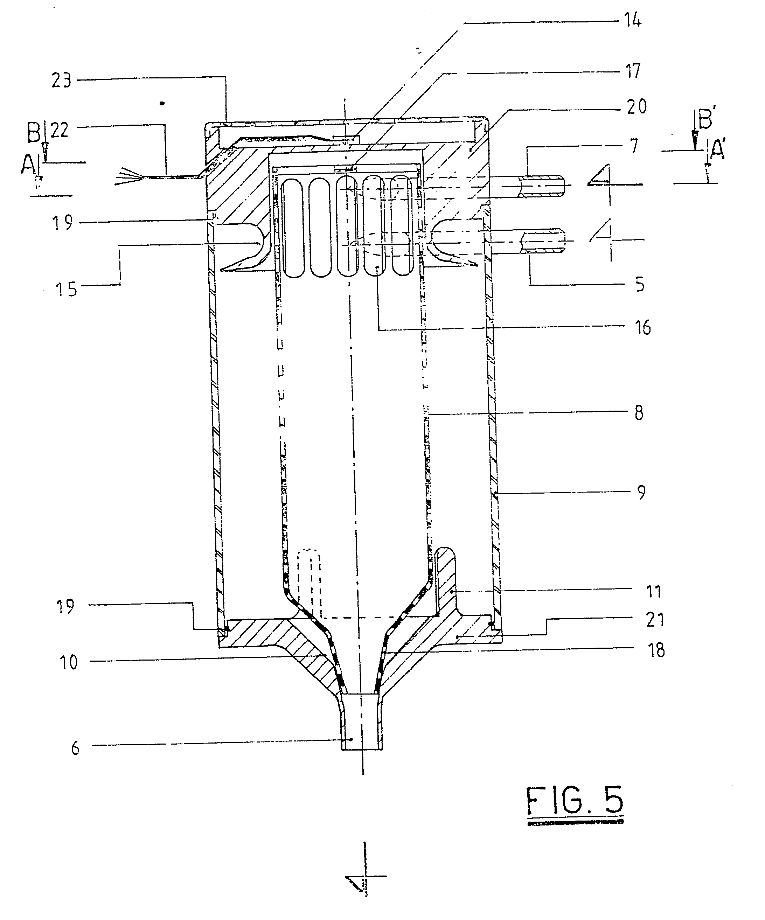

The mixture flows tangentially via the circular slot (15) into t e float chamber, as represented in fig. 5. This circular slot (15) has preferabley a hyperbolic section. As the stream of milk is forced into a certain movement, the milk flows down along the inner surface of the jacket (9) and fills the receiver gradually, while the air is separated from the mixture and is sucked up through holes (16 and 25) of the tube-like float (8).

In its starting position the tube-like float (8) closes the milk-outlet (6) of the receiver because it rests under the influence of its weight in the outlet-funnel (10) and because the cone of the funnel (18) and the outlet-funel (10) fit together perfectly.

In this position there is a small distance between the upper surface of the tube-like float (8), with worked in complementary component (17), and the oscillation meter component (14) in the upper part (20) of the receiver.

But as the level of the milk in the float-chamber rises, the tube-like float (8) begins to float under the influence of the upward pressure of the milk. By doing so the milk-outlet (6) is opened. The milk flows through the milk-outlet (6) via the milk pipeline (3) towards the milk reservoir (not shown). As long as the milk flows off, the tube-like float (8) bobs in its seat. The fluctuations of the float alter the distance between the oscillation meter components (14) and (17) constantly. When the funnel (18) rests again in the outlet-funnel (10) the milking operation is finished.

In said milk meter, this fluctuation causes variations in the electro-magnetic field between the components (14) and (17) of the oscillation meter, which are translated in the milk meter operating panel (4) into decilitres of production.

The measuring is carried out continuously during the milking of the animal concerned.

After each milking operation the milk meter (2) should be cleaned.

The wash-junction (7) of the upper part (20) of the receiver is connected by a tube to a wash-apparatus. The water enters the receiver and disperses along the jacket (9) and the outer-and inner surface of the tube-like float (8) through the vertical (16) and horizontal (25) holes provided in said float (8).

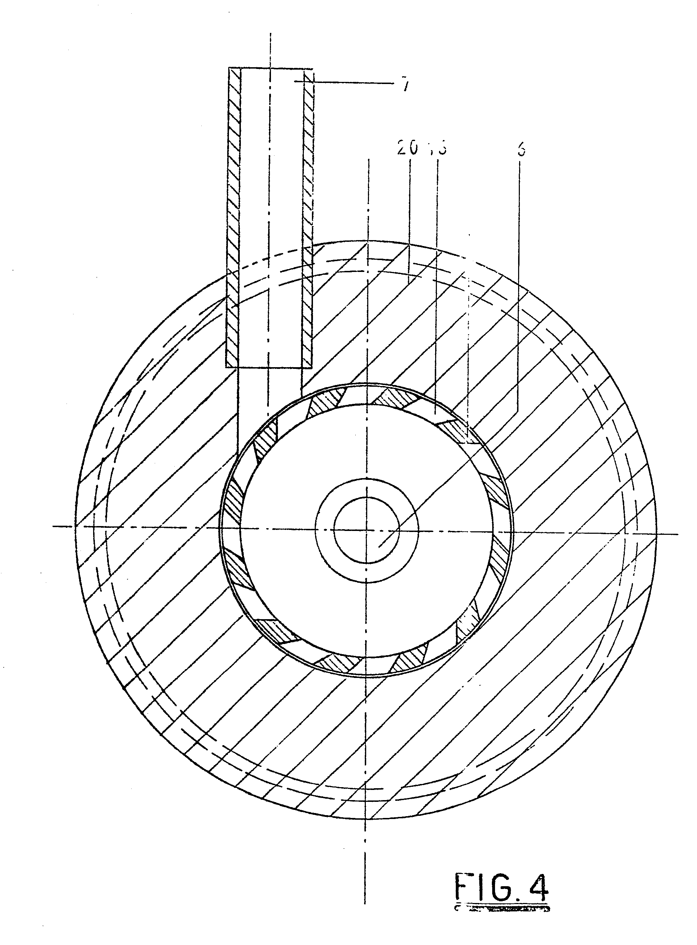

The vertical holes (16) are preferably cut out parallel and blade-like, as shown in fig. 4. Under the pressure of the injected rinse water the tube-like float (8) turns round its vertical axis and is held up straight by the upper part (20) and the vertical pins (11) of the lower part of the receiver. The turning of the tube-like float (8) eases the cleaning of the milk meter (2).

CLAIMS

1. A method for continuously measuring the production of liquid from a streaming liquid-gas mixture, which comprises separating the liquid produced from the liquid-gas mixture by projecting the liquid along the surface of a cylindrical receiver, while the gas from the mixture is sucked up into a tube-like float, located internally and concentric to said cylindrical surface, said float moving up and down in accordance with the quantity of liquid which is drawn off at the bottom of the cylindrical surface through an outlet-funnel on which said float is supported.

2. A method according to claim 1, wherein the fluctuations of said float, in accordance with the quantity of liquid produced, are transformed into electric signals which are transformed and added up in an electronic counter.

3. A meter for continuously measuring the production of liquid from a streaming liquid-gas mixture, comprising a receiver and a hollow float (8) which moves up and down in said receiver, the receiver consisting of a cylindrical jacket (9), an upper part (20) and a lower part (21), and said float (8) consisting of a tube provided with holes (16 and 25) and a conical funnel (18), the cylindrical jacket (9) being provided at its top with a supply-tube (5) which is mounted slantwise thereon, the upper part (20) of the receiver being provided at its bottom with a circular slot (15) with an outer diameter smaller than the diameter of the cylindrical jacket (9) and which is placed with its opening towards said cylindrical jacket (9) at the level of said supply-tube (5), and the lower part (21) of the receiver being provided with means to hold upright the float (8) and with an outlet-funnel (10) with which the conical funnel (18) of the float (8) engages in use, whereby the upper part (20) of the receiver and the top of the float (8) are provided

with respective components (14) & (17) of an oscillation meter which registers the fluctuations of the float (8) in the receiver.

4. A meter according to claim 3, wherein said float (8) has a cylindrical shape.

5. A meter according to claim 3 or 4, wherein said circular slot (15) in the upper part (20) of the receiver has a hyperbolic section.

6. A meter according to any one of claims 3,4 or 5, wherein said upper part (20) of the receiver is provided with a slantwise pointed wash-junction (7) and wherein holes (16 and 25) are provided in the vertical as well as in the upper surface of the said float (8).

7. A meter according to any one of claims 3 to 6, wherein the holes (16) in the vertical surface of said float (8) are cut parallel and blade-like.

8. A meter according to any one of claims 3 to 7, wherein the lower part (21) of the receiver is provided with two or more pins (11) which hold the float (8) upright in the receiver.

9. A meter according to any one of claims 3 to 8, wherein the upper part (20) of the receiver is provided with a cylindrical cavity which keeps the float (8) upright during its fluctuations.

10. A meter according to any one of the claims 3 to 9, wherein the upper part (20) of the receiver and the upper surface of the float (8) carry complementary components (14) & (17) of an oscillation meter.

11. A measuring-apparatus for measuring the production of liquid from a streaming liquid-gas mixture provided with a meter according to any one of claims 3 to 10.

FIG. 1

0185190

## FIG. 2

0185190

BB'

# FIG. 3

FIG. 4

FIG. 5

European Patent
Office

**EUROPEAN SEARCH REPORT**

Application number

EP 85 11 4267

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | US-A-4 433 577 (KHURGIN et al.) * Summary; column 4, line 55 - column 5, line 10 * | 1 | A 01 J 7/00 G 01 F 15/08 G 01 F 1/52 G 01 F 15/12 |
| A | EP-A-0 081 049 (ICKING) * Figure 1 * | 1-5 | |
| A | EP-A-0 044 929 (EISMANN) * Figures * | 1,2 | |
| A | EP-A-0 057 816 (HOEFELMAYR et al.) * Abstract; figures 1,4; page 15, line 6 - page 17, line 17; page 18, line 20 - page 19, line 16 * | 1 | |
| A | DE-B-1 151 675 (ESTERER) * Column 2, lines 37-42 * | 1 | TECHNICAL FIELDS SEARCHED (Int Cl 4) |
| A | GB-A-2 089 049 (IBARAKI et al.) * Figures * | 1-4,9, 11 | G 01 F A 01 J |
| A | EP-A-0 066 962 (MILLAR et al.) * Figures; abstract * | 1,2 | |

The present search report has been drawn up for all claims

| Place of search THE HAGUE | Date of completion of the search 13-03-1986 | Examiner NUIJTEN E.M. |
|---|---|---|